# EUROPÄISCHE PATENTSCHRIFT

(11) **EP 1 123 588 B1**
(45) Veröffentlichungstag und Bekanntmachung des Hinweises auf die Patenterteilung: **30.10.2002**
(21) Anmeldenummer: 99970805.0
(22) Anmeldetag: 10.07.1999
(51) Int. Cl.: H04B 7/08

(54) **RUNDFUNKEMPFANGSSYSTEM UND VERFAHREN ZUM BETREIBEN DESSELBEN**
RADIO RECEIVING SYSTEM AND METHOD FOR OPERATING THE SAME
SYSTEME DE RECEPTION RADIOPHONIQUE ET PROCEDE D'UTILISATION DUDIT SYSTEME

(30) Priorität: 21.10.1998 DE 19848360
(43) Veröffentlichungstag der Anmeldung: 16.08.2001
(73) Patentinhaber: ROBERT BOSCH GMBH, 70442 Stuttgart (DE)
(72) Erfinder: ENGEL, Gerhard, D-31137 Hildesheim (DE)
(86) Internationale Anmeldenummer: DE9902140
(87) Internationale Veröffentlichungsnummer: WO00024138

(56) Entgegenhaltungen:
- EP-A- 0 558 903
- DE-A- 2 743 296
- DE-A- 4 303 979
- DE-A- 19 603 514

## Beschreibung

### Technisches Gebiet

Die Erfindung betrifft ein Rundfunkempfangssystem mit einem Radio-Daten-System-Rundfunkempfänger (RDS-Rundfunkempfänger) mit einem RDS-Prozessor und mehreren, mit dem RDS-Rundfunkempfänger über ein Antennenumschaltsystem verbundenen Empfangsantennen, gemäß dem Oberbegriff des Anspruchs 1. Die Erfindung betrifft ferner ein Verfahren zum Betreiben eines Rundfunkempfangssystems mit einem Radio-Daten-System-Rundfunkempfänger (RDS-Rundfunkempfänger), einem RDS-Prozessor und mehreren, mit dem RDS-Rundfunkempfänger über ein Antennenumschaltsystem verbundenen Empfangsantennen, gemäß dem Oberbegriff des Anspruchs 7.

### Stand der Technik

Bei Rundfunkempfängern mit Auswerteeinheit für das Radio-Daten-System (RDS-Rundfunkempfänger), wie beispielsweise RDS-Autoradios, ist es bekannt, bei schlechter Signal- bzw. Empfangsqualität einen Test für Alternativfrequenzen (AF-Test) durchzuführen und ggf. auf eine Alternativfrequenz (AF) zu wechseln, wenn sich dort eine bessere Signal- bzw. Empfangsqualität ergibt.

Das sogn. RDS(Radio-Daten-System)-Signal dient bei drahtlosen Programmaustrahlungen, beispielsweise von Radioprogrammen für Reisende in einem Kraftfahrzeug, welches mit einem entsprechendem RDS-Autoradio ausgestattet ist, zur Übermittlung verschiedener wichtiger Informationen, mit denen das RDS-Autoradio u.a. eine Vielzahl von für einen ungestörten Empfang nötigen Operationen selbständig und automatisiert ausführt, ohne dass beispielsweise ein Fahrer seine Aufmerksamkeit vom Straßenverkehr abwenden und manuelle Eingaben am RDS-Autoradio durchführen muss. So führt ein im RDS-Autoradio vorgesehener RDS-Prozessor eine RDS-gesteuerte Auswahl einer aktuellen Empfangsfrequenz durch. Hierbei werden beispielsweise in einer Alternativfrequenz-Liste gespeicherte Alternativfrequenzen regelmäßig überprüft und es werden Signalstärke, Signalqualität sowie eine RDS-Fehlerrate ausgewertet und es wird die jeweilige Empfangsfrequenz am RDS-Autoradio eingestellt, welche unter Berücksichtigung der vorgenannten Messwerte einen optimalen Rundfunkempfang bietet.

Bei Rundfunkempfängern mit mehreren Empfangsantennen ist es ferner bekannt, ein Antennenumschaltsystem vorzusehen, welches analog dem RDS-Prozessor eine Signalstärke und eine Signalqualität bei Empfang über eine jeweilige Empfangsantenne überprüft und diejenige Empfangsantenne auswählt und mit dem Rundfunkempfänger verbindet, welche einen optimalen Empfang gewährleistet. Hierbei ist es jedoch nachteilig, dass bei einem RDS-Autoradio mit mehreren Empfangsantennen und einem Antennenumschaltsystem zum automatisierten Umschalten zwischen den Empfangsantennen die Vorgänge der Antennenumschaltung und der Alternativfrequenzauswahl zwei voneinander unabhängige, konkurrierende Vorgänge sind. Ferner wertet das Antennenumschaltsystem nicht eine RDS-Fehlerrate aus. Daher arbeiten diese beiden Systeme unkoordiniert wobei sie sich jedoch in ihrer Auswirkung auf eine Empfangsqualität gegenseitig beeinflussen. Im Ergebnis kann es in Grenzlagen sogar zu einer Verschlechterung des Empfangs kommen, statt zu einer angestrebten Verbesserung

DE 19603514 A offenbart ein mobiles Funkempfangssytem mit Antennen diversity und einem Antennenumschaltsystem, das von einer Auswerteschaltung gesteuert wird.

### Darstellung der Erfindung, Aufgabe, Lösung, Vorteile

Es ist Aufgabe der vorliegenden Erfindung, ein verbessertes Rundfunkempfangssystem der oben genannten Art und ein entsprechendes Verfahren zum Betreiben desselben zur Verfügung zu stellen, wobei die oben genannten Nachteile beseitigt werden.

Diese Aufgabe wird durch ein Rundfunkempfangssystem der o.g. Art mit den in Anspruch 1 gekennzeichneten Merkmalen und durch ein Verfahren der o.g. Art mit den in Anspruch 7 gekennzeichneten Merkmalen gelöst.

Dazu ist es bei einem Rundfunkempfangssystem der o.g. Art erfindungsgemäß vorgesehen, dass das Antennenumschaltsystem zum Ausführen von Umschaltoperationen von einer Empfangsantenne zu einer anderen Empfangsantenne über eine Steuervorrichtung direkt mit dem RDS-Prozessor verbunden ist.

Dies hat den Vorteil, dass eine jeweilige Antennenauswahl auch unter Berücksichtigung einer von dem RDS-Prozessor überprüften RDS-Fehlerrate und damit wesentlich genauer erfolgt, wobei die Antennenauswahl durch das Antennenumschaltsystem und eine Empfangsfrequenzauswahl durch den RDS-Prozessor nicht mehr zwei konkurrierende, unabhängige Vorgänge sind, sondern die Antennenauswahl in eine RDS-Strategie mit eingebunden ist. Dies vermeidet beispielsweise Probleme, welche sich aus unterschiedlichen Zeitkonstanten der genannten Vorgänge ergeben würden.

Vorzugsweise Weitergestaltungen des Rundfunkempfangssystems sind in den Ansprüchen 2 bis 6 beschrieben.

In einer bevorzugten Ausführungsform umfasst die Steuervorrichtung eine Steuerleitung, welche insbesondere einen einzigen Steuerdraht aufweist, welcher als Schaltkommandos unterschiedliche Ströme, beispielsweise 0 mA, 2 mA, 4 mA bzw. 6 mA, an das Antennenumschaltsystem überträgt.

Zum Auswerten von Steuerkommandos des RDS-Prozessors ist in vorteilhafter Weise zwischen dem Antennenumschaltsystem und dem RDS-Prozessor ein Interface angeordnet.

Zum verlustfreien und betriebssicheren Umschalten zwischen den Empfangsantennen umfasst das Antennenumschaltsystem für jede Empfangsantenne eine mit dieser und dem RDS-Prozessor über die Steuervorrichtung verbundene HF-Schalteinheit, welche beispielsweise ein Koax-Relais oder ein PIN-Dioden-HF-Schalter ist.

Ferner ist es bei einem Verfahren der o.g. Art erfindungsgemäß vorgesehen, dass das Antennenumschaltsystem zum Ausführen von Umschaltoperationen von einer Empfangsantenne zu einer anderen Empfangsantenne von dem RDS-Prozessor angesteuert wird.

Dies hat den Vorteil, dass eine jeweilige Antennenauswahl auch unter Berücksichtigung einer von dem RDS-Prozessor überprüften RDS-Fehlerrate und damit wesentlich genauer erfolgt, wobei die Antennenauswahl durch das Antennenumschaltsystem und eine Empfangsfrequenzauswahl durch den RDS-Prozessor nicht mehr zwei konkurrierende, unabhängige Vorgänge sind, sondern die Antennenauswahl in eine RDS-Strategie mit eingebunden ist. Dies vermeidet beispielsweise Probleme, welche sich aus unterschiedlichen Zeitkonstanten der genannten Vorgänge ergeben würden.

Eine vorzugsweise Weitergestaltung des Verfahrens ist in Anspruch 8 beschrieben.

In einer bevorzugten Weiterbildung des Verfahrens wird zum Umschalten zwischen verschiedenen Empfangsantennen eine Steuerstrom von 0 mA, 2 mA, 4 mA bzw. 6 mA von dem RDS-Prozessor an das Antennenumschaltsystem übertragen.

### Kurze Beschreibung der Zeichnungen

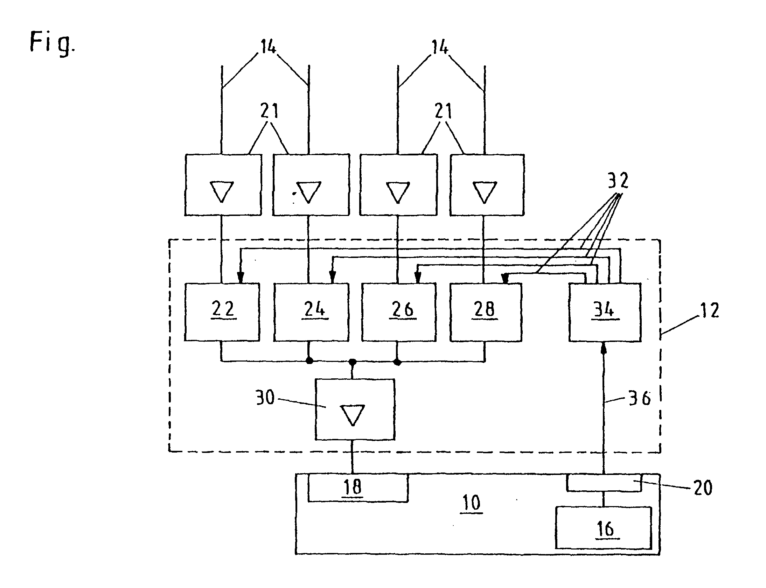

Nachstehend wird die Erfindung anhand der beigefügten Zeichnung näher erläutert. Diese zeigt in der einzigen Figur ein schematisches Blockdiagramm einer bevorzugten Ausführungsform eines erfindungsgemäßen Rundfunkempfangssystems.

### Bester Weg zur Ausführung der Erfindung

Die in der einzigen Figur dargestellte bevorzugte Ausführungsform eines erfindungsgemäßen Rundfunkempfangssystems 100 umfasst einen RDS(Radio-Daten-System)-Rundfunkempfänger 10, ein Antennenumschaltsystem 12 und mehrere alternative Empfangsantennen 14. Der RDS-Rundfunkempfänger 10 weist einen RDS-Prozessor 16, einen Antenneneingang 18 und einen Steuerleitungsausgang 20 auf. Das Antennenumschaltsystem 12 ist mit den Empfangsantennen 14 über jeweilige Verstärker 21 und jeweilige HF-Schalteinheiten 22, 24, 26 und 28 verbunden. Die HF-Schalteinheiten 22, 24, 26 und 28 sind jeweils über einen gemeinsamen Verstärker 30 mit dem Antenneneingang 18 des RDS-Rundfunkempfängers 10 verbunden. Durch entsprechende Wahl der Stellung der HF-Schalteinheiten 22, 24, 26, 28 ist eine gewünschte Empfangsantenne 14 mit dem Antenneneingang 18 des RDS-Rundfunkempfängers 10 verbindbar.

Zur Durchführung jeweiliger Umschaltvorgänge von einer Empfangsantenne 14 zu einer anderen Empfangsantenne 14 sind die HF-Schalteinheiten über jeweilige Leitungen 32 mit einem Interface 34 verbunden. Dieses Interface 34 ist über eine einzige Steuerleitung 36 mit dem Steuerleitungsausgang 20 des RDS-Rundfunkempfängers 10 gekoppelt. Der RDS-Prozessor 16 prüft erfindungsgemäß nicht nur für verschiedene Alternativfrequenzen eine Signalstärke, eine Signalqualität und eine RDS-Fehlerrate sondern auch für verschiedene Empfangsantennen 14. Hierzu gibt der RDS-Prozessor 16 einen entsprechenden Steuerbefehl über die Steuerleitung 36 an das Interface 34, welches entsprechend diesem Steuerbefehl über Leitungen 32 die HF-Schalteinheiten derart umschaltet, dass eine gewünschte Empfangsantenne 14 mit dem Antenneneingang 18 des RDS-Rundfunkempfängers 10 verbunden ist. Durch Auswertung der Messwerte für Signalstärke, Signalqualität und RDS-Fehlerrate wählt der RDS-Prozessor sowohl eine optimale Alternativfrequenz als auch eine optimale Empfangsantenne 14 aus. Diese gewählte Empfangsantenne 14 wird durch einen entsprechenden Steuerbefehl über die Steuerleitung 36 an das Interface 34 mit dem Antenneneingang 18 des RDS-Rundfunkempfängers 10 verbunden.

Der vom RDS-Prozessor über die Steuerleitung 36 übertragene Steuerbefehl ist beispielsweise ein Steuerstrom, welcher beispielhaft einen der Werte 0 mA, 2 mA, 4 mA oder 6 mA annimmt. Hierbei schaltet beispielsweise das Interface 34 die HF-Schalteinheit 22 auf Durchgang und die übrigen HF-Schalteinheiten 24, 26, 28 auf Sperren, wenn der Steuerstrom den Wert 0 mA aufweist, so dass die in der einzigen Fig. linke Antenne 14 mit dem Antenneneingang 18 des RDS-Rundfunkempfängers 10 verbunden ist. In analoger weise schaltet das Interface 34 die HF-Schalteinheit 24 auf Durchgang und die übrigen HF-Schalteinheiten 22, 26, 28 auf sperren, wenn der Steuerstrom den Wert 2 mA, die HF-Schalteinheit 26 auf Durchgang und die übrigen HF-Schalteinheiten 22, 24, 28 auf sperren, wenn der Steuerstrom den Wert 4 mA bzw. die HF-Schalteinheit 28 auf Durchgang und die übrigen HF-Schalteinheiten 22, 24, 26 auf sperren, wenn der Steuerstrom den Wert 6 mA aufweist. Es ist ersichtlich, dass auf diese Weise immer genau eine Empfangsantenne 14 mit dem Antenneneingang 18 des RDS-Rundfunkempfängers 10 verbunden ist.

Die Antennenwahl erfolgt somit erfindungsgemäß nicht eigenständig durch das Antennenumschaltsystem sondern zentral gesteuert durch den RDS-Prozessor, welcher auch eine Alternativfrequenz auswählt. Mit anderen Worten wird die Auswahl der besten Empfangsantenne 14 einer zusätzlichen Softwareroutine im RDS-Prozessor 16 übertragen. Hierdurch wird auch bei der Antennenauswahl eine RDS-Fehlerrate mit berücksichtigt, welche wesentlich empfindlicher auf sich ändernde Empfangsbedinungen reagiert als dies die Signalstärke bzw. die Signalqualität tun. Dadurch kann auch eine Antennenumschaltung noch frühzeitiger erfolgen, d.h. bevor ein Zuhörer eine Veränderung bzw. Verschlechterung eines vom RDS-Rundfunkempfängers abgegebenen Audiosignals wahrnimmt. Eine beispielsweise im Hintergrund mitgeführte Antennenbewertungsstatistik ermöglicht eine Minimierung von Umschaltvorgängen und dadurch verursachter Störgeräusche. Die zum Zusammenführen der beispielsweise vier Antennensignale auf den einzigen Antenneneingang 18 des RDS-Rundfunkempfängers 10 vorgesehenen HF-Schalteinheiten 22, 24, 26, 28 sind beispielsweise Umschaltelemente in Form von Koax-Relais oder PIN-Dioden-HF-Schalter.

Für eine schnelle Umschaltung ist in der dargestellten bevorzugten Ausführungsform eine Eindraht-Steuerschnittstelle 20, 36, 34 mit den vorerwähnten vier verschiedenen Steuersignalen 0 mA, 2 mA, 4 mA und 6 mA vorgesehen. Diese Steuersignale werden beispielsweise mit einer nicht dargestellten gesteuerten Stromquelle erzeugt und mit einem nicht dargestelltem Spannungsteiler und einem sowie zugehörigen Komparatoren dekodiert. Dadurch ist über eine einzige Leitung eine störsichere Umschaltsteuerung mit hoher Geschwindigkeit realisiert.

Die beispielhaft erwähnte Softwarelösung in dem RDS-Prozessor 16 ist einfach in das vorhandene System ohne wesentliche Neuentwicklung des RDS-Prozessors 16 an sich integrierbar, wobei gleichzeitig der relativ hohe Aufwand bei der selbständigen Antennenauswahl durch das Antennenumschaltsystem 12 vollständig entfällt. Hierbei wird insbesondere eine für herkömmliche Antennenumschaltsysteme am RDS-Rundfunkempfänger notwendiger ZF-Schnittstelle entbehrlich. Eine Gesamtverkabelung wird kostengünstiger, da keine ZF-Koax-Verbindung mehr benötigt wird, sondern die Steuerung der Antennenumschaltung nur noch über eine Ein-Draht-Steuerleitung erfolgt.

## Patentansprüche

1. Rundfunkempfangssystem (100) mit einem Radio-Daten-System-Rundfunkempfänger (RDS-Rundfunkempfänger 10) mit einem RDS-Prozessor (16) und mehreren, mit dem RDS-Rundfunkempfänger (10) über ein Antennenumschaltsystem (12) verbundenen Empfangsantennen (14), wobei das Antennenumschaltsystem (12) zum Ausführen von Umschaltoperationen von einer Empfangsantenne (14) zu einer anderen Empfangsantenne mit dem RDS-Prozessor (16) verbunden ist, **gekennzeichnet durch** eine Ausbildung des RDS-Prozessors (16) zur Bestimmung einer RDS-Fehlerrate und zur Steuerung der Umschaltoperationen auch in Abhängigkeit der RDS-Fehlerrate.

2. Rundfunkempfangssystem (100) nach Anspruch 1, **dadurch gekennzeichnet, dass** die Steuervorrichtung eine Steuerleitung (36) umfasst.

3. Rundfunkempfangssystem (100) nach Anspruch 1, **dadurch gekennzeichnet, dass** die Steuerleitung (36) einen einzigen Steuerdraht umfasst, welcher als Schaltkommandos unterschiedliche Ströme, beispielsweise 0 mA, 2 mA, 4 mA bzw. 6 mA, an das Antennenumschaltsystem (12) überträgt.

4. Rundfunkempfangssystem (100) nach einem der vorhergehenden Ansprüche, **dadurch gekennzeichnet, dass** zwischen dem Antennenumschaltsystem (12) und dem RDS-Prozessor (16) ein Interface (34) zum Auswerten von Steuerkommandos des RDS-Prozessors (16) angeordnet ist.

5. Rundfunkempfangssystem (100) nach einem der vorhergehenden Ansprüche, **dadurch gekennzeichnet, dass** das Antennenumschaltsystem (12) für jede Empfangsantenne (14) eine mit dieser und dem RDS-Prozessor (16) über die Steuervorrichtung (34, 36) verbundene HF-Schalteinheit (22, 24, 26, 28) umfasst.

6. Rundfunkempfangssystem (100) nach Anspruch 5, **dadurch gekennzeichnet, dass** wenigstens eine HF-Schalteinheit (22, 24, 26, 28), ein Koax-Relais oder ein PIN-Dioden-HF-Schalter ist.

7. Verfahren zum Betreiben eines Rundfunkempfangssystems mit einem Radio-Daten-System-Rundfunkempfänger (RDS-Rundfunkempfänger), einem RDS-Prozessor und mehreren, mit dem RDS-Rundfunkempfänger über ein Antennenumschaltsystem verbundenen Empfangsantennen, wobei das Antennenumschaltsystem zum Ausführen von Umschaltoperationen von einer Empfangsantenne zu einer anderen Empfangsantenne von dem RDS-Prozessor gesteuert wird, **dadurch gekennzeichnet, daß** die Steuerung die Umschaltoperationen auch in Abhängigkeit einer RDS-Fehlerrate steuert.

8. Verfahren nach Anspruch 7, **dadurch gekennzeichnet, dass** zum Umschalten zwischen verschiedenen Empfangsantennen unterschiedliche Ströme, beispielsweise 0 mA, 2 mA, 4 mA bzw. 6 mA, von dem RDS-Prozessor an das Antennenumschaltsystem übertragen werden.

## Claims

1. Broadcast radio reception system (100) having a radio data system broadcast radio receiver (RDS broadcast radio receiver 10) having an RDS processor (16) and a plurality of reception antennas (14) connected to the RDS broadcast radio receiver (10) via an antenna changeover system (12), the antenna changeover system (12) being connected to the RDS processor (16) for the purpose of performing changeover operations from one reception antenna (14) to another reception antenna, **characterized by** the RDS processor (16) being designed to determine an RDS error rate and to control the changeover operations on the basis of the RDS error rate as well.

2. Broadcast radio reception system (100) according to Claim 1, **characterized in that** the control apparatus comprises a control line (36).

3. Broadcast radio reception system (100) according to Claim 1, **characterized in that** the control line (36) comprises a single control wire which transfers different currents, for example 0 mA, 2 mA, 4 mA and 6 mA, to the antenna changeover system (12) as switching commands.

4. Broadcast radio reception system (100) according to one of the preceding claims, **characterized in that** an interface (34) is arranged between the antenna changeover system (12) and the RDS processor (16) for the purpose of evaluating control commands from the RDS processor (16).

5. Broadcast radio reception system (100) according to one of the preceding claims, **characterized in that** the antenna changeover system (12) comprises, for each reception antenna (14), an RF switching unit (22, 24, 26, 28) connected to the latter and to the RDS processor (16) via the control apparatus (34, 36).

6. Broadcast radio reception system (100) according to Claim 5, **characterized in that** at least one RF switching unit (22, 24, 26, 28) is a coaxial relay or a PIN diode RF switch.

7. Method for operating a broadcast radio reception system having a radio data system broadcast radio receiver (RDS broadcast radio receiver), an RDS processor and a plurality of reception antennas connected to the RDS broadcast radio receiver via an antenna changeover system, the antenna changeover system being controlled by the RDS processor for the purpose of performing changeover operations from one reception antenna to another reception antenna, **characterized in that** the controller controls the changeover operations on the basis of an RDS error rate as well.

8. Method according to Claim 7, **characterized in that** different currents, for example 0 mA, 2 mA, 4 mA and 6 mA, are transferred to the antenna changeover system by the RDS processor for the purpose of changing over between various reception antennas.

## Revendications

1. Système de réception radio (100) comportant un récepteur radiophonique RDS (10), un processeur RDS (16) et plusieurs antennes de réception (14) reliées au récepteur radiophonique RDS (10) par un système de commutation d'antenne (12),
le système de commutation d'antenne (12) étant relié au processeur RDS (16) pour effectuer les opérations de commutation d'une antenne de réception (14) à une autre antenne de réception,
récepteur **caractérisé par**
une réalisation du processeur RDS (16) pour déterminer un taux d'erreurs RDS et pour commander les opérations de commutation également en fonction du taux d'erreurs RDS.

2. Système de récepteur radiophonique (100) selon la revendication 1,
**caractérisé en ce que**
le dispositif de commande comporte une ligne de commande (36).

3. Système de récepteur radiophonique (100) selon la revendication 1,
**caractérisé en ce que**
la ligne de commande (36) comprend un unique fil de commande qui transmet comme ordre de commutation des intensités différentes par exemple, 0 mA, 2 mA, 4 mA ou 6 mA vers le système de commutation d'antenne (12).

4. Système de récepteur radiophonique (100) selon l'une des revendications précédentes,
**caractérisé par**
une interface (34) entre le système de commutation d'antenne (12) et le processeur RDS (16) pour exploiter les ordres du processeur RDS (16).

5. Système de récepteur radiophonique (100) selon l'une des revendications précédentes,
**caractérisé en ce que**
le système de commutation d'antenne (12) comprend pour chaque antenne de réception (14), une unité de commutation HF (22, 24, 26) reliée à l'antenne et au processeur RDS (16) par le dispositif de commande (34, 36).

6. Système de récepteur radiophonique (100) selon la revendication 5,
**caractérisé en ce qu'**
au moins une unité de commutation HF (22, 24, 26, 28) est un relais coax ou un commutateur à diode PIN-HF.

7. Procédé de mise en oeuvre d'un système radiophonique comportant un récepteur radiophonique RDS, un processeur RDS et plusieurs antennes de réception reliées au récepteur radiophonique RDS par un système de commutation d'antennes,
le système de commutation d'antenne étant commandé par le processeur RDS pour effectuer les opérations de commutation d'une antenne de réception vers une autre antenne de réception,
**caractérisé en ce que**
la commande des opérations de commutation se fait également en fonction du taux d'erreurs RDS.

8. Procédé de mise en oeuvre d'un système radiophonique selon la revendication 7,
**caractérisé en ce que**
pour commuter entre les différentes antennes de réception, on transmet des courants différents par exemple 0 mA, 2 mA, 4 mA et 6 mA par le processeur RDS vers le système de commutation d'antenne.
